# EUROPÄISCHE PATENTSCHRIFT

(11) **EP 3 366 400 B1**
(45) Veröffentlichungstag und Bekanntmachung des Hinweises auf die Patenterteilung: **11.08.2021**
(21) Anmeldenummer: 17157318.1
(22) Anmeldetag: 22.02.2017
(51) Int. Cl.: B23D 55/10, F16P 3/12

(54) **BANDSÄGE MIT ELEKTROMECHANISCHEM SCHNELLSTOPP DES SÄGEBANDES**
BAND SAW WITH AN ELECTROMECHANICAL QUICK STOP FOR THE SAW BAND
SCIE À RUBAN COMPRENANT UN ARRÊT RAPIDE ÉLECTROMAGNÉTIQUE DU RUBAN DE SCIE

(43) Veröffentlichungstag der Anmeldung: 29.08.2018
(73) Patentinhaber: Reich, Carl-Eugen, 73630 Remshalden (DE)
(72) Erfinder: Reich, Carl-Eugen, 73630 Remshalden (DE)
(74) Vertreter: Kohler Schmid Möbus Patentanwälte

(56) Entgegenhaltungen:
- WO-A1-2016/032345
- WO-A1-2016/041020
- DE-A1- 2 705 581
- FR-A1- 2 703 943
- US-A- 4 094 218

## Beschreibung

Die Erfindung betrifft eine Bandsäge mit einem motorangetriebenen Sägeband, mit einer Spanneinrichtung zum Spannen des Sägebandes, mit einer Bremseinrichtung zum Stoppen des Sägebandes und mit einer elektrischen Steuerung zum elektrischen Betätigen der Bremseinrichtung, sowie ein neues Verfahren zum Stoppen und insbesondere zum Blockieren des Sägebandes einer Bandsäge.

Derartige Bandsägen werden von der Fa. C.-E. REICH GMBH, Remshalden, hergestellt und vertrieben.

Bei diesen bekannten Bandsägen wird das auf einer oberen und einer unteren Rolle umlaufende Sägeband gespannt, indem die obere Rolle gegenüber der ortsfesten, unteren Rolle mittels einer Gasdruckfeder senkrecht nach oben gedrückt wird. Die Gasdruckfeder ist am unteren Federende an einem ortsfesten Auflager des Bandsägengehäuses abgestützt und drückt einen am Bandsägengehäuse gelagerten Spannarm nach oben, der die obere Rolle trägt und mit dem oberen Federende der Gasdruckfeder verbunden ist. Die Spannkraft des Sägebandes entspricht ungefähr der Kraft der Gasdruckfeder. Zum Ersetzen oder Reinigen des Sägebandes wird der Spannarm samt seiner oberen Rolle vom Bediener gegen die Wirkung der Gasdruckfeder nach unten gezogen und dadurch das Sägeband entspannt.

Im normalen Betrieb wird das Sägeband mit einem mechanischen Bremsmotor oder einer elektrischen Gleichstrombremse, welche auf die Wicklung des als Drehstrommotor ausgeführten Drehantriebs geschaltet wird, zum Stillstand gebracht. Die Bremszeiten betragen bei Verwendung des mechanischen Bremsmotors ungefähr 2 Sekunden und bei Verwendung der elektronisch gesteuerten Gleichstrombremse ungefähr 3,5 Sekunden. Noch kürzere Bremszeiten können aufgrund der großen Massenträgheiten des Drehantriebs und der Umlenkrollen des Sägebandes nur mit einem sehr großen Kraftaufwand erreicht werden. So ist beispielsweise aus https://www.youtube.com/watch?v=NiRegdech E eine mechanische Bremse bekannt, die das Sägeband innerhalb von weniger als 15 Millisekunden festklemmt, wodurch größere Verletzungen verhindert werden können. In der Praxis hat sich jedoch gezeigt, dass viele Bauteile der Bandsäge einer solchen extremen Beanspruchung nicht standhalten. Als Lebensdauer-verkürzender Einfluss müssen auch unbeabsichtigte und/oder beabsichtigte Auslösungen des Bremsvorganges durch den Bediener berücksichtigt werden, so dass Tests auf richtige Bremsfunktion in wöchentlichem, wenn nicht gar täglichem Rhythmus ausgeführt werden müssen. Dokument WO 2016/032345 und FR 2703943 geben Beispiele aus dem Stand der Technik, wobei FR 2703943 alle Merkmale der Präambel des unabhängigen Anspruchs 1 offenbart.

Demgegenüber liegt der vorliegenden Erfindung die Aufgabe zugrunde, das Sägeband einer Bandsäge trotz der großen Massenträgheiten des Drehantriebs und der Umlenkrollen mit geringem Kraftaufwand innerhalb von deutlich weniger als 0,5 Sekunde, mechanisch zu stoppen, ohne dass dabei die Bauteile der Bandsäge einer extremen Beanspruchung ausgesetzt werden.

Diese Aufgabe wird bei einer Bandsäge der eingangs genannten Art erfindungsgemäß dadurch gelöst, dass die Spanneinrichtung aus einer Spannungsstellung, in der das Sägeband gespannt ist, in eine Entspannungsstellung, in der das Sägeband nicht gespannt ist, von der Steuerung elektrisch schaltbar ist, dass die Bremseinrichtung als eine auf das Sägeband wirkende elektromechanische Bremse ausgebildet ist, und dass die Steuerung ausgebildet ist, zum Stoppen und insbesondere zum Blockieren des Sägebandes sowohl die Spanneinrichtung aus der Spannungs- in die Entspannungsstellung zu schalten als auch die elektromechanische Bremse zu betätigen.

Erfindungsgemäß wird das Sägeband beim Stoppen entspannt und dadurch von den großen Schwungmassen des Drehantriebs und der Umlenkrollen entkoppelt, so dass das Sägeband nicht mehr angetrieben wird und die zu stoppende Masse auf die Masse des Sägebandes, also um einen Faktor von ca. 150, reduziert ist. Das Sägeband wird durch die elektromechanische Bremse in Millisekunden gestoppt. Die Spanneinrichtung kann beispielsweise eine Feder sein, deren Federlänge mittels eines elektrisch schaltbaren Elementes in der Spannungsstellung verlängert und in der Entspannungsstellung verkürzt ist. Das Schalten der Spanneinrichtung in die Entspannungsstellung und die Betätigung der elektromechanischen Bremse können, um die Bremszeit zu minimieren, zeitgleich oder zueinander zeitlich verzögert erfolgen.

Erfindungsgemäß ist die Spanneinrichtung aus der Spannungsstellung in die Entspannungsstellung mittels eines beweglichen Gegenlagers schaltbar, an dem die Spanneinrichtung in der Spannungsstellung abgestützt und in der Entspannungsstellung nicht abgestützt ist, wobei die Steuerung ausgebildet ist, zum Stoppen des Sägebandes das Gegenlager aus einer die Spanneinrichtung abstützenden Stellung in eine die Spanneinrichtung nicht abstützende Stellung zu bewegen. In der Entspannungsstellung ist der Spanneinrichtung das Gegenlager entzogen und dadurch das Sägeband entspannt.

Bei einer bevorzugten Weiterbildung dieser Ausführungsform ist das Gegenlager in seine die Spanneinrichtung nicht abstützende Stellung, z.B. mittels einer Feder, vorgespannt und in seiner die Spanneinrichtung abstützenden Stellung mittels einer, insbesondere elektrisch oder pneumatisch, ansteuerbaren Verriegelung, z.B. mittels eines Elektromagneten, gehalten. Die Spanneinrichtung kann an einem Schwenkhebel, insbesondere an einer Wippe, gebildet sein, an dem eine Vorspannfeder angreift, um das Gegenlager gegen die Wirkung der Spanneinrichtung in seine die Spanneinrichtung nicht abstützende Stellung vorzuspannen. Das Gegenlager kann aus seiner die Spanneinrichtung abstützenden Stellung in seine die Spanneinrichtung nicht abstützende Stellung beispielsweise verschiebbar oder, was bevorzugt ist, verkippbar gelagert sein.

Besonders bevorzugt läuft das Sägeband auf zwei Rollen um, von denen die eine Rolle gegenüber der anderen Rolle beweglich gelagert ist und durch die Spanneinrichtung in Richtung fort von der anderen Rolle kraftbeaufschlagt ist, um das Sägeband zu spannen. Vorteilhafterweise ist das Sägeband vertikal ausgerichtet und läuft folglich auf einer oberen und einer unteren Rolle um. Für den Fall, dass die obere Rolle mit der Spannungseinrichtung zusammenwirkt, ist die obere Rolle bereits durch ihre Gewichtskraft nach unten in die Entspannungsstellung vorgespannt. Vorzugsweise weist die Bremse für das Sägeband mindestens eine mittels eines, insbesondere elektrisch oder pneumatisch, ansteuerbaren Bremsantriebs betätigbare Bremsbacke, insbesondere zwei Bremsbacken, zum Festklemmen des Sägebandes auf. Zum Stoppen des Sägebandes wird von der Steuerung der Bremsantrieb angesteuert, damit die mindestens eine Bremsbacke das Sägeband festklemmt. Alternativ oder zusätzlich kann die Bremse mindestens ein Sperrelement aufweisen, das zwischen einer Ausgangsstellung, in welcher es nicht in die Bewegungsbahn der Sägebandzähne eingreift, und einer Sperrstellung, in welcher es in die Bewegungsbahn der Sägebandzähne eingreift, mittels eines elektrisch ansteuerbaren Bremsantriebs bewegbar ist. Zum Stoppen und Blockieren des Sägebandes wird von der Steuerung das Sperrelement mittels des Bremsantriebs aus seiner Ausgangsstellung in seine Sperrstellung bewegt, um zwischen zwei Sägebandzähne einzugreifen und dadurch das Sägeband zu stoppen bzw. zu blockieren.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: schematisch die erfindungsgemäße Bandsäge mit einer Gasdruckfeder zum Spannen des Sägebandes;
- Fign. 2a, 2b: schematisch ein als Wippe ausgeführtes Gegenlager der Gasdruckfeder in der einen Wippenendstellung (Fig. 2a), in der das Sägeband gespannt ist, und in der anderen Wippenendstellung (Fig. 2b), in der das Sägeband entspannt ist; und
- Fign. 3a, 3b: eine in Fig. 1 gezeigte Bremse mit Bremsbacken (Fig. 3a) und mit einem Sperrelement (Fig. 3b).

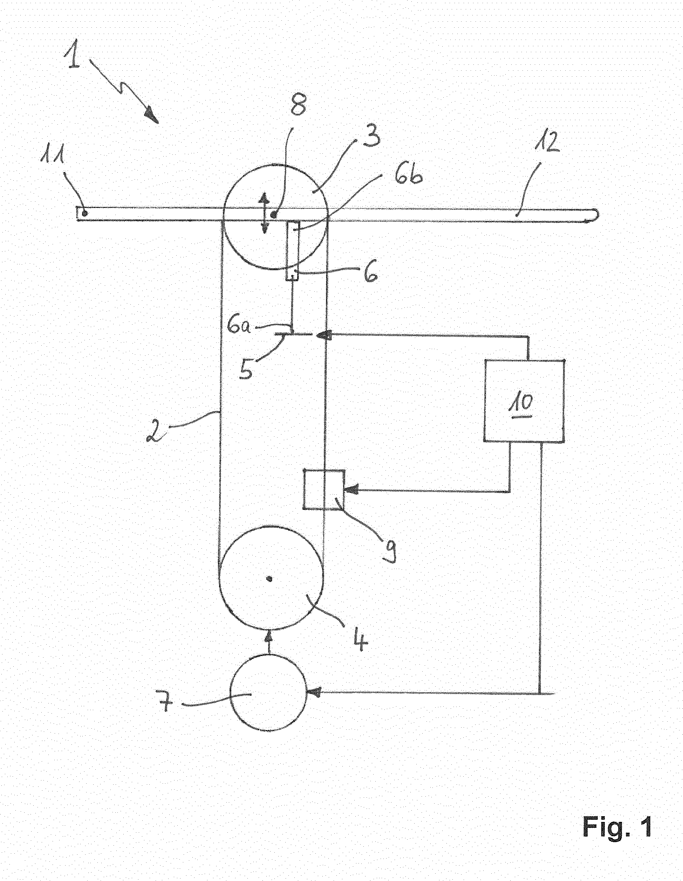

Die in **Fig. 1** gezeigte Bandsäge **1** umfasst ein vertikal ausgerichtetes, motorangetriebenes Sägeband **2,** das oben auf einer vertikal verschiebbar gelagerten oberen Rolle **3** und unten auf einer ortsfest gelagerten, unteren Rolle **4** umläuft, eine zwischen der oberen Rolle 3 und einem Gegenlager **5** wirkende Gasdruckfeder (Spanneinrichtung) **6** zum Spannen des Sägebandes 2 und einen Antriebsmotor **7** für die untere Rolle 4. Das Sägeband 2 wird gespannt, indem die Achse **8** der oberen Rolle 3 mittels der Gasdruckfeder 6 gegenüber der ortsfesten, unteren Rolle 4 vertikal nach oben gedrückt wird. Die Bandsäge 1 weist außerdem eine auf das Sägeband 2 wirkende elektromechanische Bremse **9** auf, die von einer elektrischen Steuerung **10** angesteuert bzw. betätigt wird.

Die Gasdruckfeder 6 ist mit ihrem unteren Federende **6a** am Gegenlager 5 abgestützt und drückt nahe der oberen Rollenachse 8 einen bei **11** am Bandsägengehäuse gelagerten Spannarm **12** nach oben, der die obere Rolle 3 trägt und mit dem oberen Federende **6b** der Gasdruckfeder 6 gelenkig verbunden ist. Die Spannkraft des Sägebandes 2 entspricht somit ungefähr der Kraft der Gasdruckfeder 6. Zum Ersetzen oder Reinigen des Sägebandes 2 wird der Spannarm 12 mitsamt der oberen Rolle 3 vom Bediener gegen die Wirkung der Gasdruckfeder 6 nach unten gezogen und dadurch das Sägeband 2 entspannt.

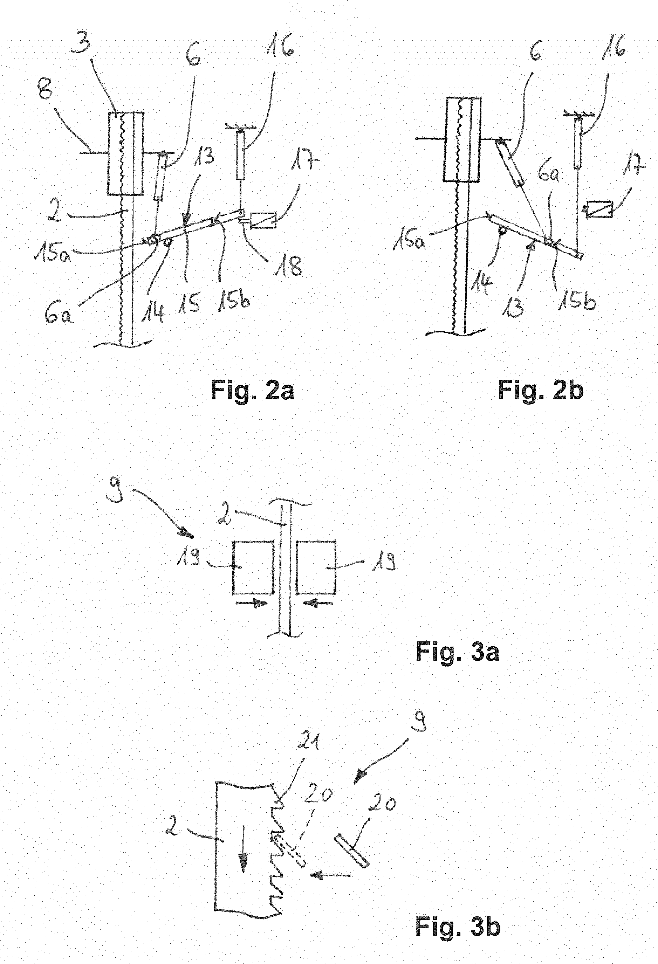

Wie in **Fign. 2a, 2b** gezeigt, ist das Gegenlager 5 durch einen Schwenkhebel bzw. eine Wippe **13** mit einer exzentrisch angeordneten Drehachse in Form einer horizontalen Welle **14** gebildet, die rechtwinklig zu der horizontalen oberen Rollenachse 8 verläuft. Die Wippe 13 ist um ca. 90° zwischen den in Fign. 2a, 2b gezeigten zwei Wippenendstellungen verschwenkbar gelagert und weist eine nach oben offene Längsführung **15** auf, entlang der das z.B. als Laufrolle ausgeführte untere Federende 6a in radialer Richtung zwischen einem achsnahen Führungsende **15a** auf der linken Wippenseite und einem achsfernen Führungsende **15b** auf der rechten Wippenseite frei verschiebbar geführt ist. Je nach Wippenendstellung bildet entweder das rechte oder das linke Führungsende 15a, 15b den Führungstiefpunkt der Längsführung 15, so dass beim Verschwenken der Wippe 13 das untere Federende 6b, angetrieben von der Federkraft der Gasdruckfeder 6, jeweils von dem einen Führungsende unter Überwindung eines Totpunkts zu dem nun tiefer liegenden, anderen Führungsende verschoben und dabei die Gasdruckfeder 6 entsprechend verschwenkt wird. Der in Fig. 2b durch das achsferne Führungsende 15b gebildete Führungstiefpunkt liegt um ca. 20mm tiefer als der in Fig. 2a durch das achsnahe Führungsende 15a gebildete Führungstiefpunkt, so dass die Gasdruckfeder 6 in Fig. 2a gespannt und in Fig. 2b entspannt ist.

Fig. 2a zeigt den normalen Betriebszustand der Bandsäge 1, in dem die Gasdruckfeder 6 am achsnahen Führungsende 15a der Wippe 13 abgestützt und somit gespannt ist. Die Wippe 13 ist durch eine Vorspann-Gasdruckfeder **16,** die von oben auf den längeren, rechten Hebelarm der Wippe 13 drückt, im Uhrzeigersinn in die in Fig. 2b gezeigte Wippenendstellung vorgespannt, da das auf die Wippe 13 im Uhrzeigersinn wirkende Drehmoment der Vorspann-Gasdruckfeder 16 größer als das auf die Wippe 13 entgegen dem Uhrzeigersinn wirkende Drehmoment der Gasdruckfeder 6 ist. In der in Fig. 2a gezeigten, vorgespannten Wippenendstellung ist die Wippe 13 durch einen von der Steuerung 10 elektrisch ansteuerbaren Elektrohubmagneten **17** verriegelt, auf dessen Stößel **18** der rechte Hebelarm der Wippe 13 aufliegt.

Für einen Not-Stopp des Sägebandes 2 werden von der Steuerung 10 sowohl die Bremse 9 angesteuert bzw. betätigt, um das Sägeband 2 abzubremsen, als auch der Elektrohubmagnet 17 angesteuert bzw. geschaltet, wodurch der Stößel 18 zurückgezogen wird. Angetrieben von der Vorspann-Gasdruckfeder 16 verschwenkt die nun nicht mehr verriegelte Wippe 13 in die in Fig.2b gezeigte Wippenendstellung, wodurch auch die Gasdruckfeder 6 entgegen dem Uhrzeigersinn verschwenkt wird, bis das untere Federende 6a in der Längsführung 15 vom linken Führungsende 15a unter Überwindung des Totpunkts an das nun ca. 20mm tiefer liegende, rechte Führungsende 15b verschoben ist. Der Gasdruckfeder 6 ist somit das abstützende Gegenlager 5 entzogen, und die obere Rolle 3 samt Spannarm 10 fällt nach unten, wodurch das Sägeband 2 innerhalb von Millisekunden nicht mehr gespannt und auch nicht mehr angetrieben ist. Das Sägeband 2 ist somit von den großen Schwungmassen der Rollen 3, 4 und des Antriebsmotors 7 entkoppelt, so dass die zu stoppende Masse auf die Masse des Sägebandes 2, also um einen Faktor von ca. 150, reduziert ist. Durch die gleichzeitig wirkende Bremse 8 steht das Sägeband 2 innerhalb von Millisekunden. Der Antriebsmotor 7 wird über eine mechanische Bremse oder eine Gleichstrombremse innerhalb von 1-2 Sekunden zum Stillstand gebracht. Die obere Rolle 3 dreht weiter, was aber keinen Einfluss mehr auf das Sägeband 2 hat, da die zwischen Sägeband 2 und oberer Rolle 3 wirkende Reibungskraft vernachlässigbar gering ist.

Das durch die Wippe 13 gebildete Gegenlager 5 ist also zwischen der in Fig. 2a gezeigten Stellung, in der die Gasdruckfeder 6 am Gegenlager 5 abgestützt ist, und der in Fig. 2b gezeigten Stellung, in der die Gasdruckfeder 6 nicht am Gegenlager 5 abgestützt ist, beweglich gelagert, wobei die Bewegung des Gegenlagers 5 aus der abstützenden in die nicht abstützende Stellung von der Steuerung 10 mittels des Elektrohubmagneten 17 ausgelöst wird.

Nach erfolgtem Not-Stopp wird durch Hochschwenken des Spannhebels 10 sowohl das Sägeband 2 wieder gespannt als auch die Wippe 13 samt Gasdruckfeder 6 zurück in die in Fig. 2a gezeigte Wippenendstellung geschwenkt ist, in der das untere Federende 6a am linken Führungsende 15b anliegt und die Wippe 13 mittels des Elektrohubmagneten 17 wieder verriegelt ist. Eine Inbetriebnahme der Bandsäge 1, ohne dass die Wippe 13 samt Gasdruckfeder 6 in die in Fig. 2a gezeigte Wippenendstellung geschwenkt worden ist, ist nicht möglich, da das Sägeband 2 nicht gespannt werden kann.

Statt der oben beschriebenen Wippenmechanik kann das Gegenlager 5 gegen die Wirkung einer Vorspannkraft in seiner die Gasdruckfeder 6 abstützenden Stellung auch unmittelbar durch eine elektrisch oder pneumatisch ansteuerbare Verriegelung gehalten sein. Durch Ansteuern der Verriegelung wird das Gegenlager entriegelt und, angetrieben von der Vorspannkraft, in die die Gasdruckfeder 6 nicht mehr abstützende Stellung bewegt, insbesondere verschoben oder verkippt.

Wie in **Fign. 3a, 3b** gezeigt, weist die Bremse 9 zwei z.B. mittels Elektrohubmagneten betätigbare Bremsbacken **19** zum Festklemmen des Sägebandes 2 sowie ein Sperrelement **20** auf, das z.B. mittels eines Elektrohubmagneten zwischen einer Ausgangsstellung, in welcher es nicht in die Bewegungsbahn der Sägebandzähne **21** eingreift, und einer Sperrstellung, in welcher es in die Bewegungsbahn der Sägebandzähne 21 eingreift, bewegbar ist. Zum Stoppen und Blockieren des Sägebandes 2 werden von der Steuerung 10 über die Elektrohubmagnete die Bremsbacken 19 und das Sperrelement 20 angesteuert bzw. betätigt. Wenn das Sperrelement in der gestrichelt dargestellten Sperrstellung an einem Sägebandzahn 20 anliegt, ist das Sägeband 2 gestoppt bzw. blockiert.

Der Bediener muss sich über ein Kabel an der Steuerung 10 elektrisch anschließen, sonst kann die Bandsäge 1 nicht gestartet werden. Dazu hat der Bediener einen elektrisch leitenden Handschuh an, an dem das Kabel angeklemmt ist. Berührt nun der Handschuh das Sägeband 2, wird ein Stromkreis geschlossen, wodurch von der Steuerung 10 der Not-Stopp des Sägebandes 2 ausgelöst wird.

Alternativ oder zusätzlich kann der Not-Stopp des Sägebandes 2 auch durch Detektieren eines farbigen Gegenstands an der Hand des Bedieners, z.B. eines farbigen Handschuhs, ausgelöst werden. Blaue Handschuhe müssen in der Nahrungsmittelindustrie aus hygienischen Gründen getragen werden und sind daher obligatorisch vorhanden. Durch entsprechende Farbsensoren kann der Gefahrenbereich, also ca. 10 bis 20 cm vor dem Sägeband 2, von der Steuerung 10 überwacht werden, die dann, wenn der blaue Handschuh in diesen Gefahrenbereich eintritt, den Not-Stopp auslöst. Eine weitere Möglichkeit der Überwachung des Gefahrenbereichs besteht darin, die Bewegung eines farbigen Gegenstands an der Hand des Bedieners, z.B. eines farbigen Handschuhs, mittels einer dem Gegenstand nachgeführten, verschwenkbaren Kamera zu verfolgen ("camera tracking"). Kommt der Handschuh dem Gefahrenbereich zu nahe, wird dies von der Steuerung 10 anhand der Schwenkposition der Kamera erkannt und der Not-Stopp ausgelöst. Mit diesen beiden Varianten kann auf die "Verkabelung" des Bedieners verzichtet werden, zumal die Bremse schon aktiviert worden ist, bevor das Sägeband 2 durch den verkabelten Bediener berührt wird.

## Patentansprüche

1. Bandsäge (1) mit einem motorangetriebenen Sägeband (2), mit einer Spanneinrichtung (6) zum Spannen des Sägebandes (2), mit einer Bremseinrichtung zum Stoppen des Sägebandes (2) und mit einer elektrischen Steuerung (10) zum Betätigen der Bremseinrichtung,
wobei die Spanneinrichtung (6) aus einer Spannungsstellung, in der das Sägeband (2) gespannt ist, in eine Entspannungsstellung, in der das Sägeband (2) nicht gespannt ist, von der Steuerung (10) mittels eines verkippbar gelagerten Gegenlagers (5) schaltbar ist, an dem die Spanneinrichtung (6) in der Spannungsstellung abgestützt und in der Entspannungsstellung nicht abgestützt ist,
wobei die Bremseinrichtung als eine auf das Sägeband (2) wirkende Bremse (9) ausgebildet ist, und
wobei die Steuerung (10) ausgebildet ist, zum Stoppen und insbesondere zum Blockieren des Sägebandes (2) sowohl die Spanneinrichtung (6) aus der Spannungs- in die Entspannungsstellung durch Verkippen des Gegenlagers (5) aus einer die Spanneinrichtung (6) abstützenden Stellung in eine die Spanneinrichtung (6) nicht abstützende Stellung zu schalten als auch die Bremse (9) zu betätigen,
**dadurch gekennzeichnet,**
**dass** das Gegenlager (5) durch einen Schwenkhebel, insbesondere eine Wippe (13), mit exzentrisch angeordneter Drehachse (14) und mit einer Längsführung (15) gebildet ist, entlang der das eine Ende (6b) der Spanneinrichtung (6) zwischen einem achsnahen Führungsende (15a) auf der einen Hebelseite und einem achsfernen Führungsende (15b) auf der anderen Hebelseite frei verschiebbar geführt ist, wobei beim Verschwenken des Schwenkhebels das eine Ende (6b) der Spanneinrichtung (6), angetrieben von der gespannten Spanneinrichtung (6), von dem achsnahen Führungsende (15a) unter Überwindung eines Totpunkts zu dem achsfernen Führungsende (15b) verschoben wird, wodurch die Spanneinrichtung (6) entspannt wird.

2. Bandsäge nach Anspruch 1, **dadurch gekennzeichnet, dass** das Gegenlager (5) in seine die Spanneinrichtung (6) nicht abstützende Stellung vorgespannt und in seiner die Spanneinrichtung (6) abstützenden Stellung mittels einer, insbesondere elektrisch und oder pneumatisch, ansteuerbaren Verriegelung gehalten ist.

3. Bandsäge nach einem der vorhergehenden Ansprüche, **dadurch gekennzeichnet, dass** das Sägeband (2) auf zwei Rollen (3, 4) umläuft, von denen die eine Rolle (3) gegenüber der anderen Rolle (4) beweglich gelagert und durch die Spanneinrichtung (6) in Richtung fort von der anderen Rolle (4) kraftbeaufschlagt ist, um das Sägeband (2) zu spannen.

4. Bandsäge nach einem der vorhergehenden Ansprüche, **dadurch gekennzeichnet, dass** das Sägeband (2) vertikal ausgerichtet ist.

5. Bandsäge nach einem der vorhergehenden Ansprüche, **dadurch gekennzeichnet, dass** die Bremse (9) mindestens eine Bremsbacke (19), insbesondere zwei Bremsbacken (19), zum Festklemmen des Sägebandes (2) aufweist.

6. Bandsäge nach einem der vorhergehenden Ansprüche, **dadurch gekennzeichnet, dass** die Bremse (9) mindestens ein Sperrelement (20) aufweist, das zwischen einer Ausgangsstellung, in welcher es nicht in die Bewegungsbahn der Sägebandzähne (21) eingreift, und einer Sperrstellung, in welcher es in die Bewegungsbahn der Sägebandzähne (21) eingreift, bewegbar ist, wobei die Steuerung (10) ausgebildet ist, zum Stoppen und Blockieren des Sägebandes (2) das Sperrelement (20) aus seiner Ausgangsstellung in seine Sperrstellung zu bewegen.

## Claims

1. Band saw (1) comprising a motor-driven saw band (2), a tensioning device (6) for tensioning the saw band (2), a braking device for stopping the saw band (2) and an electrical control (10) for actuating the braking device,
wherein the tensioning device (6) can be switched by the control (10) from a tensioned position in which the saw band (2) is tensioned into a relaxation position in which the saw band (2) is not tensioned by means of a tiltably mounted counter bearing (5) on which the tensioning device (6) is supported in the tensioned position and is not supported in the relaxation position, wherein the braking device is designed as a brake (9) that acts on the saw band (2), and
wherein the control (10) is configured to switch the tensioning device (6) from the tensioned position into the relaxation position by tilting the counter bearing (5) from a position in which the tensioning device (6) is supported into a position in which the tensioning device (6) is not supported, and also to actuate the brake (9) in order to stop and in particular block the saw band (2), **characterized in that**
the counter bearing (5) is formed by a pivot lever, in particular a rocker (13), with eccentrically arranged axis of rotation (14) and with a longitudinal guide (15) along which one end (6b) of the tensioning device (6) is guided in a freely movable manner between a guide end (15a) close to the axis on the one lever side and a guide end (15b) remote from the axis on the other lever side, wherein when pivoting the pivot lever, one end (6b) of the tensioning device (6), which is driven by the tensioned tensioning device (6), is moved from the guide end (15a) close to the axis, thereby overcoming a dead center, to the guide end (15b) remote from the axis, thereby relaxing the tensioning device (6).

2. Band saw according to claim 1, **characterized in that** the counter bearing (5) is pretensioned into its position in which it does not support the tensioning device (6) and is held in its position in which it supports the tensioning device (6) by means of a locking device that can be controlled in particular electrically and/or pneumatically.

3. Band saw according to any one of the preceding claims, **characterized in that** the saw band (2) revolves on two rollers (3, 4) of which one roller (3) is movably mounted with respect to the other roller (4) and to which a force is applied by the tensioning device (6) in a direction away from the other roller (4) in order to tension the saw band (2).

4. Band saw according to any one of the preceding claims, **characterized in that** the saw band (2) is vertically aligned.

5. Band saw according to any one of the preceding claims, **characterized in that** the brake (9) comprises at least one brake shoe (19), in particular two brake shoes (19), for clamping the saw band (2).

6. Band saw according to any one of the preceding claims, **characterized in that** the brake (9) comprises at least one locking element (20) which can be moved between an initial position in which it does not engage in the movement path of the saw band teeth (21), and a locking position in which it engages in the movement path of the saw band teeth (21), wherein the control (10) is configured to move the locking element (20) out of its initial position into its locking position for stopping and blocking the saw band (2).

## Revendications

1. Scie à ruban (1) comprenant un ruban de scie à moteur (2), un dispositif tendeur (6) destiné à tendre le ruban de scie (2), un dispositif de freinage destiné à arrêter le ruban de scie (2) et une commande électrique (10) destinée à actionner le dispositif de freinage,
le dispositif tendeur (6) pouvant être commuté d'une position de tension, dans laquelle le ruban de scie (2) est tendu, à une position de détente dans laquelle le ruban de scie (2) n'est pas tendu par la commande (10), par la commande au moyen d'un contre-palier (5), logé de manière basculante, sur lequel le dispositif tendeur (6) est en appui en position tendue et n'est pas en appui en position détendue,
le dispositif de freinage étant conçu comme un frein (9) agissant sur le ruban de scie (2), et
la commande (10) étant conçue aussi bien pour commuter le dispositif tendeur (6) de la position tendue à la position détendue par basculement du contre-palier (5) d'une position en appui sur le dispositif tendeur (6) dans une position sans appui sur le dispositif tendeur (6) que pour actionner le frein (9) afin d'arrêter et notamment de bloquer le ruban de scie (2),
**caractérisée en ce que**
le contre-palier (5) est formé par un levier pivotant, en particulier une bascule (13), comprenant un axe de rotation (14) disposé de manière excentrique et un guide longitudinal (15) le long duquel une extrémité (6b) du dispositif tendeur (6) est guidée de manière à coulisser librement entre une extrémité de guidage (15a) proche de l'axe d'un côté du levier et une extrémité de guidage (15b) éloignée de l'axe de l'autre côté du levier, une extrémité (6b) du dispositif tendeur (6), entraînée par le dispositif tendeur (6) tendu, étant déplacée, lors du pivotement du levier pivotant, de l'extrémité de guidage (15a) proche de l'axe à l'extrémité de guidage (15b) éloignée de l'axe en surmontant un point mort, ce qui détend le dispositif tendeur (6).

2. Scie à ruban selon la revendication 1, **caractérisée en ce que** le contre-palier (5) est précontraint dans sa position sans appui sur le dispositif tendeur (6) et est maintenu dans sa position en appui sur le dispositif tendeur (6) au moyen d'un dispositif de verrouillage, notamment commandable électriquement et/ou pneumatiquement.

3. Scie à ruban selon l'une des revendications précédentes, **caractérisée en ce que** le ruban de scie (2) court sur deux rouleaux (3, 4), dont un rouleau (3) est monté de manière mobile par rapport à l'autre rouleau (4) et est soumis à une force dans le sens opposé à l'autre rouleau (4) par le dispositif tendeur (6) afin de tendre le ruban de scie (2).

4. Scie à ruban selon l'une des revendications précédentes, **caractérisée en ce que** le ruban de scie (2) est orienté verticalement.

5. Scie à ruban selon l'une des revendications précédentes, **caractérisée en ce que** le frein (9) comporte au moins une mâchoire de frein (19), notamment deux mâchoires de frein (19), destinées à serrer le ruban de scie (2).

6. Scie à ruban selon l'une des revendications précédentes, **caractérisée en ce que** le frein (9) comporte au moins un élément de blocage (20) qui est déplaçable entre une position initiale, dans laquelle il ne s'engage pas dans le trajet de déplacement des dents (21) du ruban de scie, et une position de blocage dans laquelle il s'engage dans le trajet de déplacement des dents (21) du ruban de scie, la commande (10) étant conçue pour déplacer l'élément de blocage (20) de sa position initiale dans sa position de blocage afin d'arrêter et de bloquer le ruban de scie (2).
